(19) Europäisches Patentamt
European Patent Office
Office européen des brevets

(11) **EP 1 002 763 B1**

(12) **FASCICULE DE BREVET EUROPEEN**

(45) Date de publication et mention
de la délivrance du brevet:
**29.08.2007 Bulletin 2007/35**

(51) Int Cl.:
**C01B 17/05** *(2006.01)* **B01D 53/86** *(2006.01)*

(21) Numéro de dépôt: **99402534.4**

(22) Date de dépôt: **14.10.1999**

(54) **Procédé et dispositif de traitement d'un gaz contenant de l'hydrogène sulfuré et du dioxyde de soufre, comportant une étape d'élimination de sous-produits**

Verfahren und Vorrichtung zur Behandlung von Schwefelwasserstoff und Schwefeldioxyd enthaltenden Gasen mit einer Entfernungsstufe für Nebenprodukte

Process and installation for treating a gas containing hydrogen sulfide and sulfur dioxide, including a by-products removing step

(84) Etats contractants désignés:
**BE DE GB IT NL**

(30) Priorité: **20.11.1998 FR 9814674**

(43) Date de publication de la demande:
**24.05.2000 Bulletin 2000/21**

(73) Titulaire: **Institut Français du Pétrole**
**92852 Rueil-Malmaison Cedex (FR)**

(72) Inventeurs:
• **Lecomte, Fabrice**
**92500 Rueil Malmaison (FR)**
• **Streicher, Christian**
**92500 rueil Malmaison (FR)**
• **Barrere-Tricca, Cécile**
**75011 Paris (FR)**

(56) Documents cités:
**FR-A- 2 358 186** **FR-A- 2 532 190**
**FR-A- 2 735 460** **US-A- 4 565 678**

**Description**

La présente invention a pour objet un procédé de traitement, par un solvant organique contenant au moins un catalyseur, d'un effluent gazeux contenant au moins de l'hydrogène sulfuré et du dioxyde de soufre, au cours duquel on élimine la majorité des sous-produits formés au cours dudit procédé de traitement.

L'étape d'élimination des sous-produits, ou étape de traitement, est réalisée notamment à une température permettant la formation et la croissance des cristaux de ces sous-produits, c'est à dire la cristallisation de ces sous-produits.

Le procédé selon l'invention est par exemple appliqué dans des unités de traitement Clauspol fonctionnant en aval du procédé Claus.

Le procédé Claus est largement utilisé, notamment en raffinerie (après des unités d'hydrodésulfuration ou de craquage catalytique) et en traitement du gaz naturel, pour récupérer du soufre élémentaire à partir de charges gazeuses contenant de l'hydrogène sulfuré. Cependant, les fumées émises par les unités Claus renferment même après plusieurs étages catalytiques des quantités non négligeables de gaz acides. Il est alors nécessaire de traiter ces effluents (tail gas) d'unité Claus pour éliminer la majorité des composés toxiques de façon à respecter les normes antipollution.

Il est connu, par exemple, de récupérer à partir d'une unité Claus environ 95 % en poids de soufre présent.

Un traitement de cet effluent d'unité Claus avec une unité Clauspol permet d'atteindre par exemple 99.8 % en poids de soufre récupéré, à partir de la réaction exothermique de Claus :

$$2 \, H_2S + SO_2 \leftrightarrow 3 \, S + 2 \, H_2O \qquad \text{réaction (1)}$$

Un tel traitement met en oeuvre un milieu réactionnel constitué par un solvant organique et au moins un catalyseur comprenant un sel alcalin ou alcalino-terreux d'un acide organique. La mise en contact du gaz à traiter et du solvant organique contenant le catalyseur s'effectue dans un réacteur-contacteur gaz-liquide dont la température est contrôlée par passage du solvant, qui a été soutiré du réacteur-contacteur par une pompe de circulation, dans un échangeur thermique, de façon à favoriser le taux le plus élevé de conversion en soufre tout en évitant la formation de soufre solide. Il est connu que dans ce type d'unité, le solvant ayant une capacité limitée à dissoudre le soufre élémentaire, se charge en soufre élémentaire liquide libre que l'on peut séparer du solvant par simple décantation. Cette décantation soufre liquide - solvant s'effectue dans une zone de décantation liquide-liquide, qui peut être placée en fond du réacteur-contacteur. Le soufre est donc récupéré sous forme liquide. Le brevet FR 2.532.190 propose une installation pour mettre en oeuvre le procédé Claus.

Le fonctionnement d'une telle unité est décrit par exemple dans l'une des références suivantes :

Y. BARTHEL, H. GRUHIER, The IFP Clauspol 1500 process: eight years of industrial experience, Chem. Eng. Monogr., 10 (Large Chem. Plants), 1979, p. 69-86.
HENNICO A., BARTHEL Y., BENAYOUN D., DEZAEL C., Clauspol 300 : the new IFPTGT process, For présentation at AIChE Summer National Meeting, Denver (Colo.), August 14-17, 1994.

Il est par ailleurs connu que le taux de désulfuration d'une unité de ce type peut être amélioré en désaturant le solvant en soufre dans une boucle de désaturation selon un procédé décrit dans le brevet FR 2.735.460 du demandeur. Dans ce cas, une partie de la solution monophasique de solvant et de soufre qui est soutirée à l'extrémité du réacteur-contacteur est refroidie afin de cristalliser le soufre. Ce soufre cristallisé est alors séparé du solvant par divers moyens connus de séparation solide-liquide, tel que la filtration, la décantation ou la centrifugation. On obtient alors d'une part un solvant appauvri en soufre qui peut être recyclé vers le réacteur-contacteur, et d'autre part une suspension enrichie en soufre solide qui peut être réchauffée pour fondre le soufre, puis envoyée dans une zone de décantation liquide-liquide solvant-soufre d'où on récupère le soufre liquide.

Si un tel procédé se révèle performant, il peut toutefois être limité.

Par exemple, des réactions secondaires ont lieu dans le réacteur-contacteur conduisant à la formation de sous-produits, en majorité des sels tels que les sulfates ou les thiosulfates d'alcalins ou d'alcalino-terreux, provenant par exemple de la dégradation lente du catalyseur. Ces sous-produits ont tendance à s'accumuler dans la zone de décantation à l'interface entre le solvant organique et le soufre liquide, ce qui rend difficile la décantation du soufre liquide.

Une des manières de remédier à ce problème est décrit dans le brevet FR 2.735.460 qui mentionne la possibilité de faire passer du solvant contenant de tels sels sur un filtre. Les sels se déposent sur le filtre, et le solvant contenant du soufre est envoyé à une étape de désaturation du solvant en soufre. D'une part, un tel traitement du solvant en circulation ne suffit pas à éliminer entièrement toute accumulation de ces sels au niveau de l'interface soufre liquide - solvant y compris dans la zone de décantation soufre liquide - solvant située en aval de la zone de désaturation du solvant en soufre. D'autre part, dans le cas où le solvant n'est pas désaturé en soufre au moyen d'une boucle de désaturation, on risque de co-éliminer du soufre avec les sels solides ce qui rendra délicat le traitement du fluide issu de la régénération du filtre.

L'objet de la présente invention concerne un procédé et son dispositif associé, dans lequel on soumet une solution soutirée du réacteur-contacteur et comportant au moins du solvant, du catalyseur, du soufre et des sous-produits, à au moins une étape de chauffage et au moins une étape de séparation, afin d'éliminer la majorité des sous-produits qu'elle contient et afin d'obtenir un solvant pratiquement exempt desdits sous-produits.

Ces sous-produits proviennent par exemple de la dégradation lente du catalyseur.

On a constaté qu'en chauffant à une température adéquate le fluide soutiré du réacteur-contacteur et comportant au moins du solvant, du catalyseur, du soufre et des sous-produits :

* on favorise la cristallisation des sous-produits en solution dans le solvant, ce qui facilite l'élimination desdits sous-produits,
* on solubilise les gouttelettes de soufre libre éventuellement présentes dans le solvant, ce qui permet d'éviter la co-élimination du soufre avec les sous-produits et facilite l'éventuel traitement du fluide issu de la régénération d'éléments de la zone de traitement

Avantageusement le solvant pratiquement exempt de sous-produits peut être recyclé en partie ou en totalité vers le réacteur-contacteur où est opéré le traitement du gaz.

L'invention concerne un procédé de traitement d'un gaz contenant au moins de l'hydrogène sulfuré ($H_2S$) et au moins du dioxyde de soufre ($SO_2$) dans lequel on met en contact, à une température adéquate, ledit gaz avec un solvant organique contenant au moins un catalyseur, on récupère d'une part, un effluent gazeux ne contenant pratiquement plus d'hydrogène sulfuré ni de dioxyde de soufre, et d'autre part, du soufre liquide séparé du solvant par une décantation liquide-liquide.

Il est caractérisé en ce que :

• on extrait après l'étape de mise en contact un fluide F comportant au moins du solvant, du catalyseur, du soufre et des sous-produits,
• on envoie ledit fluide F à une étape de traitement, comportant au moins une étape de chauffage dudit fluide F à une température choisie pour favoriser la cristallisation des sous produits, et une étape de séparation des sous-produits du solvant,
• à l'issue de l'étape de traitement on récupère au moins un fluide $F_1$ composé essentiellement de solvant, de catalyseur et de soufre et quasiment exempt de sous-produits, et un fluide $F_2$ comportant la majorité des sous-produits.

Le fluide F est par exemple une solution monophasique liquide.

La température à laquelle on chauffe ledit fluide F est comprise par exemple entre 120 et 180 °C et de préférence entre 120 et 150 °C.

L'étape de traitement est par exemple réalisée en mettant en oeuvre au moins un des modes opératoires suivants :

a) on réalise au moins une étape de filtration de manière à récupérer ledit fluide $F_1$ composé essentiellement de solvant appauvri en sous-produits solides et ledit fluide $F_2$ issu de la régénération du support filtrant et comportant la majorité des sous-produits, et/ou
b) on effectue au moins une étape de captation des sous-produits sur un support solide de manière à récupérer au moins ledit fluide $F_1$ composé essentiellement de solvant appauvri en sous-produits et ledit fluide $F_2$ issu de la régénération du support solide et comportant la majorité des sous-produits.

On peut opérer les modes de traitement a) et b) à une température comprise entre 120 et 180 °C et de préférence entre 120 et 150 °C.

On peut recycler en partie ou en totalité le fluide $F_1$ issu de l'étape de traitement vers l'étape de mise en contact.

L'invention concerne aussi un dispositif permettant d'éliminer et de récupérer des sous-produits formés au cours d'un procédé de traitement d'un effluent gazeux contenant au moins de l'hydrogène sulfuré ($H_2S$) et du dioxyde de soufre ($SO_2$) dans lequel on utilise un solvant organique et au moins un catalyseur, ledit dispositif comportant au moins un réacteur-contacteur comprenant au moins une zone de décantation, une ligne d'introduction d'au moins un gaz à traiter, une ligne d'introduction d'un fluide comportant au moins du solvant et du catalyseur, une ligne d'extraction d'au moins un gaz épuré et une ligne d'extraction d'un fluide F comportant au moins du solvant, du catalyseur, du soufre et des sous-produits.

Il est caractérisé en ce qu'il comporte au moins une zone de traitement alimenté par ladite ligne d'extraction du fluide F, ladite zone de traitement comportant des moyens de chauffage adaptés pour favoriser la cristallisation des sous-produits, des moyens de séparation adaptés à séparer les sous-produits cristallisés du reste dudit fluide F comportant au moins du solvant, du catalyseur et du soufre, une ligne d'extraction d'un fluide $F_1$ composé essentiellement de solvant, de catalyseur et de soufre et quasiment exempt de sous produits, et une ligne d'extraction d'un fluide $F_2$ comportant la majorité des sous-produits.

Les moyens de chauffage opèrent par exemple entre 120 et 180 °C et de préférence entre 120 et 150 °C.

Selon un mode de réalisation, la zone de décantation est située dans la partie inférieure dudit réacteur-contacteur.

La zone de traitement peut comporter au moins un des moyens de séparation choisis parmi les suivants :

* des moyens de filtration, lesdits moyens étant adaptés pour produire au moins le fluide $F_1$ comportant essentiellement du solvant et au moins le fluide $F_2$ comportant la majorité des sous-produits formés, et/ou
* des moyens de captation, tels que des métaux, des charbons actifs, des zéolithes, des résines, des alumines, des silices ou des céramiques lesdits moyens étant adaptés pour produire au moins le fluide $F_1$ comportant essentiellement du solvant et au moins le fluide $F_2$ comportant la majorité des sous-produits formés.

Le dispositif peut comporter une ligne permettant de recycler dans le réacteur-contacteur une partie au moins du solvant issu de l'étape de traitement, ou fluide $F_1$.

Le réacteur-contacteur est par exemple choisi parmi un des dispositifs donnés dans la liste suivante : réacteur avec garnissage vrac ou structuré ou mélangeur statique SMV ou impacteur ou hydro-éjecteur ou atomiseur ou contacteur à fils.

Le procédé et le dispositif selon invention sont par exemple appliqués pour le traitement des effluents d'unités Claus traitant de l'$H_2S$ issu d'opérations d'épuration du gaz naturel ou de raffinage du pétrole brut.

Le procédé et son dispositif associé présentent notamment comme avantages :

* d'éviter les problèmes de décantation du soufre liquide dans la zone de décantation liquide-liquide,
* d'éviter l'accumulation de sous-produits solides au niveau des garnissages équipant certains types de réacteurs-contacteurs,
* de pouvoir améliorer simplement les unités Clauspol existantes par une simple adjonction d'un petit nombre d'équipements et donc pour un coût faible,
* de récupérer un solvant purifié et de le recycler directement vers le procédé de traitement des gaz.

L'invention sera mieux comprise au vu des figures suivantes illustrant de manière simplifiée et non limitative plusieurs modes de réalisation du procédé, parmi lesquelles :

- la figure 1 illustre selon un schéma bloc les différents éléments constituant le dispositif selon l'invention, notamment la zone de traitement,

- la figure 2 illustre un dispositif de traitement d'un gaz comportant une zone de décantation située dans la partie inférieure d'un réacteur-contacteur,

- la figure 3 schématise une variante où la zone de traitement est une filtration,

- la figure 4 schématise une variante où la zone de traitement est une masse de captation, et

- la figure 5 représente un schéma de l'art antérieur utilisé à tire d'exemple comparatif.

Les modes de réalisation donnés ci-après à titre illustratif et nullement limitatif concernent l'élimination des sous-produits formés au cours d'un procédé de traitement d'un gaz contenant au moins de l'hydrogène sulfuré et du dioxyde de soufre. Ces sous-produits proviennent notamment de la dégradation lente du catalyseur utilisé dans le procédé de traitement du gaz.

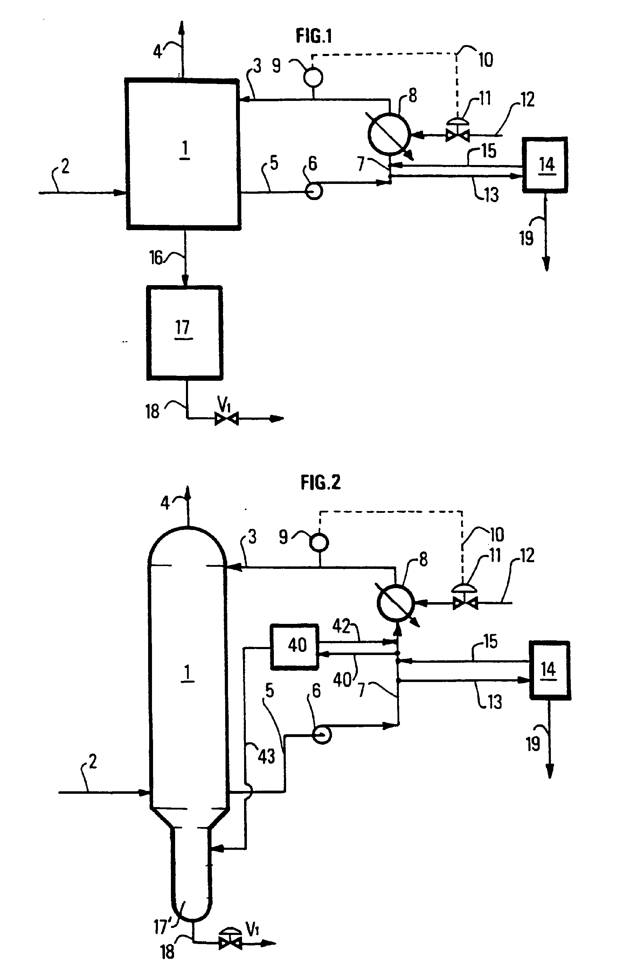

Selon la figure 1, le dispositif comprend un réacteur contacteur 1 gaz-liquide. Une ligne 2 alimente le réacteur-contacteur en une charge gazeuse soufrée par exemple un effluent issu d'une unité Claus et une ligne 3 introduit par exemple une solution recyclée comprenant un solvant, tel que du polyéthylène glycol 400 et du catalyseur, tel que du salicylate de sodium.

Différents solvants et catalyseurs choisis parmi la liste donnée dans la suite de la description peuvent être utilisés sans sortir du cadre de l'invention.

Le gaz épuré est évacué par une ligne 4.

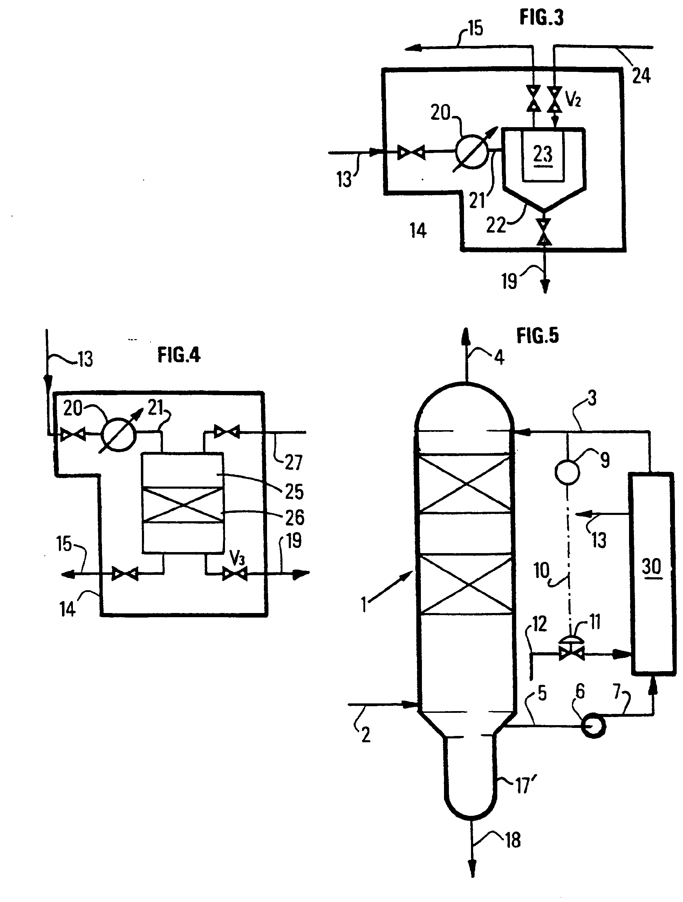

Un fluide F, tel qu'une solution de solvant contenant au moins du catalyseur, du soufre et des sous-produits formés, est soutiré du réacteur contacteur 1 par une ligne 5. Cette solution est ensuite envoyée par une pompe 6 et des lignes 7 et 13 vers une zone de traitement 14 où elle est débarrassée de la majorité des sous-produits. La zone de traitement 14 comporte au moins des moyens de chauffage et des moyens de séparation dont certains exemples sont détaillés sur les figures 3 et 4. Les moyens de chauffage sont adaptés pour obtenir une température permettant de favoriser la cristallisation des sous-produits en solution dans le solvant. Tous dispositifs connus de l'homme de métier et capables d'obtenir et d'opérer à cette température et permettant notamment de réaliser la cristallisation des sous-produits formés énoncée précédemment peuvent être utilisés.

Les moyens de chauffage du solvant dans la zone de traitement sont adaptés pour fonctionner dans une gamme de température comprise entre 120 et 180 °C et de préférence entre 120 et 150 °C.

La zone de traitement 14, comportant les moyens (non représentés sur cette figure) de chauffage de la solution de solvant et les moyens (non représentés sur cette figure) de séparation des sous-produits du solvant, a pour fonction notamment de traiter la solution F comportant du solvant essentiellement, du catalyseur, du soufre et des sous-produits, pour obtenir au moins un fluide $F_2$ comportant la majorité des sous-produits qui est soutiré par la ligne 19, ainsi qu'un fluide $F_1$ composé essentiellement de solvant exempt pratiquement en totalité des sous-produits qui est par exemple recyclé par la ligne 15 vers le réacteur-contacteur 1.

Le fluide $F_1$ qui se présente sous la forme d'une solution monophasique liquide quasiment exempt de sous-produits est envoyée par les lignes 15 et 7 dans un échangeur thermique 8 où elle est refroidie à une température adéquate, compatible avec le fonctionnement du réacteur-contacteur 1, par exemple 120°C. Cette température peut être contrôlée à l'aide d'un régulateur 9 relié à l'échangeur thermique 8 par une ligne 10. La ligne 10 est par exemple en liaison avec une vanne 11 équipant une ligne d'arrivée 12 du fluide réfrigérant dans l'échangeur thermique. Cette solution de solvant refroidie et issue de l'échangeur thermique 8 peut être recyclée vers le réacteur-contacteur 1 par la ligne 3.

Le fluide $F_2$ comportant la majorité des sous-produits et soutirés par la ligne 19 est par exemple dilué dans de l'eau avant d'être envoyé au traitement des eaux.

On soutire par une ligne 18 et située dans la partie inférieure de la zone de décantation 17, reliée au réacteur-contacteur 1 par une ligne 16, le soufre liquide obtenu par décantation. La ligne 18 est par exemple pourvue d'une vanne $V_1$.

La plage de température choisie peut aussi permettre la solubilisation des gouttelettes de soufre libre éventuellement présentes dans le solvant. Ceci a pour effet d'éviter d'éliminer le soufre avec les sous-produits formés et de faciliter un traitement éventuel du fluide issu de la régénération des éléments de la zone de traitement.

La figure 2 schématise une variante de réalisation pour laquelle, la zone de décantation est intégrée au réacteur-contacteur 1.

Les références des éléments identiques à ceux décrits à la figure 1 ont été conservées.

Au niveau de la partie inférieure du réacteur contacteur 1 se trouve une zone de décantation 17', pourvue d'une ligne d'extraction 18 du soufre liquide, la ligne étant équipée par exemple d'une vanne $V_1$ de manière identique à la figure 1.

Une partie de la solution monophasique de solvant qui circule dans la boucle de recyclage (constituée notamment des éléments 5, 6, 7, 8, 3), par exemple 10 à 20% de la solution, est par exemple prélevée par une ligne 40, à partir de la ligne 7, afin d'être envoyée dans une zone de traitement telle qu'une zone 41 de désaturation du solvant en soufre.

Dans cette zone 41 de désaturation, la solution monophasique est refroidie, par exemple à 60°C, afin de former une suspension de cristaux de soufre dans le solvant. Ce soufre cristallisé est ensuite séparé du solvant par différents procédés de séparation solide-liquide connus de l'Homme du métier, tels que la filtration, la décantation ou la centrifugation. On obtient alors, d'une part un solvant appauvri en soufre extrait par une ligne 42, pour être recyclé par exemple vers le réacteur-contacteur 1, et d'autre part une suspension enrichie en soufre solide. La suspension enrichie en soufre solide peut être réchauffée par des moyens appropriés connus des spécialistes pour fondre le soufre, puis envoyée par une ligne 43 dans la zone de décantation liquide-liquide.

Dans les différentes variantes de réalisation données dans cette description, les conditions opératoires de fonctionnement du procédé et du dispositif peuvent être les suivantes :

Le réacteur-contacteur 1 peut opérer à une température par exemple comprise entre 50 et 130°C, et de préférence entre 120 et 122°C. Ledit soufre formé se présente sous forme liquide. Le soufre liquide formé est très peu soluble dans le solvant et à cause de sa densité plus élevée, il décante au fond du réacteur. L'eau formée est évacuée avec le gaz épuré. Dans ces conditions (basse température et élimination en continu des produits formés), l'équilibre (1) est déplacé vers la droite. Cette température est par exemple régulée par passage du solvant dans l'échangeur thermique 8.

Le procédé peut être opéré dans un intervalle de pression très large, par exemple 9,8 kPa à 4,9 MPa. Selon un mode de mise en oeuvre, on opère à la pression atmosphérique.

Le réacteur-contacteur peut être formé par tout équipement ou ensemble d'équipements permettant de réaliser une mise en contact d'un gaz et d'un liquide. Il peut par exemple être choisi parmi la liste des équipements suivants :

- Réacteur avec garnissage vrac (par exemple des selles Intalox) ou structuré (par exemple de type Mellapak) commercialisé par exemple par la société Sulzer,
- Mélangeur statique SMV commercialisé par exemple par la société Sulzer,
- Impacteur commercialisé par exemple par la société AEA,
- Hydro-éjecteur commercialisé par exemple par la société Biotrade,
- Atomiseur commercialisé par exemple par la société LAB,
- Contacteur à fils commercialisé par exemple par la société Toussaint Nyssenne.

Les solvants habituellement utilisés sont les mono- ou poly-alkylènes glycols, les esters de mono- ou poly-alkylènes glycols ou les éthers de mono- ou poly-alkylènes glycols tels que décrits dans les brevets FR 2 115 721 (US 3 796 796), FR 2 122 674 et FR 2 138 371 (US 3 832 454).

Les catalyseurs utilisés sont choisis parmi ceux qui sont mentionnés dans ces même brevets et plus particulièrement des sels alcalins d'acides organiques faibles tels que l'acide benzoïque et l'acide salicylique.

La concentration du catalyseur dans la phase liquide est avantageusement comprise entre 0.1 et 5 % en poids et plus avantageusement entre 0.5 et 2 % en poids.

Le procédé et le dispositif selon l'invention sont particulièrement bien adaptés au traitement de gaz ayant une teneur en gaz acides ($H_2S + SO_2$) comprise entre 0.1 et 100 % en volume. Il est toutefois particulièrement avantageux pour des gaz ayant une teneur faible en gaz acides ($H_2S + SO_2$) par exemple entre 0.1 et 50 % en volume et plus particulièrement entre 0.5 et 5 % en volume.

L'étape de séparation dans la zone 14 peut être réalisée de différentes façons dont certaines sont données ci-après à titre illustratif et nullement limitatif.

**Traitement par filtration**

Selon une variante illustrée par la figure 3, la zone de traitement 14 comporte des moyens de chauffage 20 et des moyens de séparation par filtration 22.

La solution F de solvant extraite du réacteur-contacteur 1 par la ligne 5 est envoyée par la pompe 6 et les lignes 7 (figure 2) et 13 dans la zone de traitement 14 comportant un échangeur thermique 20 et des moyens de filtration, par exemple un ou plusieurs filtres 22 constitués par exemple chacun d'au moins une cartouche filtrante 23 à toile déformable.

La solution est réchauffée dans l'échangeur thermique 20 à une température comprise entre 120 et 150 °C afin de favoriser la cristallisation des sous-produits en solution dans le solvant et de solubiliser les gouttelettes de soufre libre éventuellement présentes dans le solvant. La solution passe ensuite dans le filtre 22 où les sous-produits solides se déposent sur la cartouche 23 alors que le solvant épuré $F_1$ est extrait par la ligne 15 afin d'être recyclé en tête du réacteur-contacteur 1.

Le débatissage de la cartouche 23 pour éliminer les sous-produits solides déposés se fait par exemple en isolant le filtre 22 du reste du dispositif et en envoyant à l'intérieur de la cartouche 23 un fluide, tel que du solvant filtré ou encore de l'eau, introduit sous une pression légèrement supérieur à la pression atmosphérique par une ligne 24. L'opération de débatissage peut-être commandée lorsque l'épaisseur du gâteau formé est telle que la différence de pression sur la cartouche en filtration devient élevée, par exemple comprise entre 0,1 et 0,4 MPa.

Les sous-produits en solution dans le fluide de débatissage sont extraits au fond du filtre par une ligne 19.

Les moyens permettant d'isoler la zone de traitement 14 du reste du circuit de traitement sont connus de l'homme du métier et ne sont pas détaillés. Ils comportent notamment des vannes d'isolation $V_2$.

On peut aussi disposer d'au moins un second filtre fonctionnant en by-pass ou en parallèle du premier afin de continuer à filtrer en continu la solution de solvant lors de l'étape de débatissage du premier filtre.

**Traitement par captation**

Selon une variante illustrée par la figure 4, la séparation des sous-produits formés est réalisée dans la zone de traitement 14 par captation sur un support solide.

La solution de solvant soutirée du réacteur-contacteur 1 par la ligne 5 est envoyée par la pompe 6 et les lignes 7 (figure 2) et 13 dans la zone de traitement 14 comportant un échangeur thermique 20 et des moyens de captation, par exemple une ou plusieurs capacités 25 contenant chacune un ou plusieurs lits de captation 26. Les lits de captation sont constitués de solides, par exemple des métaux, des charbons actifs, des zéolithes, des résines, des alumines, des silices ou des céramiques.

La solution est réchauffée dans l'échangeur thermique 20 à une température comprise entre 120 et 150 °C afin notamment de favoriser la cristallisation des sous-produits en solution dans le solvant et de solubiliser les gouttelettes de soufre libre éventuellement présentes dans le solvant. La solution de solvant introduite par la ligne 21 dans la capacité 25, passe sur le lit 26 de captation qui piège les sous-produits. Le solvant débarrassé de la majorité des sous-produits est extrait de la capacité 25 par la ligne 15 pour être recyclé vers le réacteur-contacteur 1.

Lorsque le lit de captation est saturé en sous-produits solides, on isole la capacité 25 du reste du dispositif et on fait passer sur le lit de captation 26 par exemple de l'eau propre introduite par une ligne 27. L'eau ressort chargée de sous-produits dissous par une ligne 19. Selon le support solide utilisé, le contrôle de la saturation peut se faire soit par une mesure de la perte de charge sur le lit de captation soit en extrapolant des courbes de saturation établies en laboratoire.

De même que pour le traitement par filtration, les moyens permettant d'isoler la zone de traitement 14 du reste du circuit de traitement sont connus de l'homme du métier et ne sont pas détaillés. Ils comportent notamment des vannes d'isolation $V_3$.

On peut aussi disposer d'au moins une seconde capacité fonctionnant en by-pass de la première pour continuer à capter en continu les sous-produits contenus dans la solution de solvant lors de la régénération ou du remplacement du lit de captation de la première capacité.

Deux exemples numériques donnés ci-après permettent de mieux faire comprendre les avantages obtenus par les différentes variantes du procédé selon l'invention.

Dans ces exemples, le mot « sel » est employé pour désigner les sous-produits susceptibles d'être formés notamment par des réactions secondaires du fait de la présence du catalyseur lors d'un procédé de traitement de gaz.

Les deux exemples donnés diffèrent par leur méthode de séparation des sous-produits du solvant. Dans les deux cas, on opère le réacteur-contacteur de la façon suivante :

On introduit par la ligne 2 un gaz de queue d'unité Claus, dont le débit est de 12300 Nm$^3$/h, dans un réacteur-contacteur vertical 1 constitué d'une colonne contenant deux lits de garnissage, et on le met en contact à 125°C avec un solvant organique contenant un catalyseur soluble introduit par la ligne 3.

Le garnissage utilisé pour ces deux exemples est constitué de 2 lits de selles ("Intalox" en céramique de surface spécifique de 250 m$^2$/m$^3$).

Le solvant organique utilisé est un polyéthylène glycol de masse moléculaire 400 et le catalyseur soluble est du salicylate de sodium à une concentration de 100 millimoles/kg de solvant.

Le solvant est recyclé entre le bas et le haut du réacteur-contacteur par les lignes 5, 7 et 3 à un débit de 500 m$^3$/h, grâce à la pompe de circulation 6 à travers un échangeur de température 8, contrôlé et régulé en température par un système de mesure-contrôle 9, 10 et 11 permettant d'injecter de l'eau chaude à 80 °C dans l'échangeur par la ligne 12. La température du solvant recyclée est de 125°C.

Le gaz épuré sort du réacteur-contacteur par la ligne 4. Le soufre formé décante en fond de réacteur-contacteur et est extrait par la ligne 18 à raison de 332 kg/h.

Les compositions des gaz d'entrée et de sortie de l'unité sont données dans le tableau suivant :

| Constituants | Gaz entrée (2) % Vol. | Gaz sortie (4) % Vol. |
|---|---|---|
| $H_2S$ | 1,234 | 0,0586 |
| $SO_2$ | 0,617 | 0,0293 |
| $CO_2$ | 4,000 | 4,038 |
| COS | 0,015 | 0,009 |
| $CS_2$ | 0,015 | 0,009 |
| $S_v$* | 0,14 | 0,03 |
| $N_2$ | 60 | 60,396 |
| $H_2O$ | 34 | 35,384 |
| Somme des composés soufrés (comptée en soufre) | 2,036 | 0,1449 |
| * Sv = soufre vapeur + soufre vésiculaire | | |

Le rendement en composés soufrés dans le réacteur-contacteur est égal à :

$$\frac{(\%\ composés\ soufrés\ entrée - \%\ composés\ soufrés\ sortie)}{\%\ composés\ soufrés\ entrée} \times 100$$

$$= \frac{(2.036 - 0.1449)}{2.036} \times 100 = 92.9 \quad \%$$

Le rendement de l'ensemble unité Claus réalisant 97 % de rendement + unité de finition Clauspol est égal à :

$$97 + \frac{(3 \times 92.9)}{100} = 99.8 \quad \%$$

La solution F extraite par la ligne 5 est traitée par filtration ou par captation dans la zone de traitement 14 selon les deux schémas exposés ci-après.

### Exemple 1 (figures 2 et 3) : séparation par filtration

L'échangeur thermique 20 permet de réchauffer la solution de solvant à 135 °C et un filtre 22 constitué de trois cartouches 23, d'1 m² de surface chacune la séparation des deux fluides $F_1$ et $F_2$. Le débatissage se fait en isolant la zone de traitement 14 du reste du dispositif et en envoyant à l'intérieur des cartouches de l'eau sous légère pression par la ligne 24 quand l'épaisseur du gâteau devient supérieure à 3 mm, c'est à dire lorsque la delta de pression sur les cartouches en filtration devient supérieure à 0,2 MPa. Après débatissage, les sels sont récupérés en solution dans l'eau au fond du filtre et envoyés par la ligne 19 vers le traitement des eaux. Le débatissage du filtre se fait toutes les 12 h environ.

### Exemple 3 (figures 2 et 4) : séparation par captation

Dans cet exemple l'échangeur thermique 20 permet de réchauffer la solution de solvant à 135 °C et une capacité 25 contenant deux lits de captation 26 des sels d'1 m³ chacun de volume en matériau présentant une bonne affinité avec les sels à capter, par exemple des selles de céramique de réaliser la séparation des deux fluides $F_1$ et $F_2$. Après un mois de fonctionnement en continu, la perte de charge devient supérieure à 7 kPa indiquant que les lits de captation sont saturés en sels. La zone de traitement est alors isolée du reste du dispositif et les lits de captation sont régénérés par lavage à l'eau qui entre propre par la ligne 27 et ressort chargée de sels par la ligne 19 pour être envoyée vers le traitement des eaux.

La figure 5 schématise le procédé réalisé selon l'art antérieur dans lequel le fluide F, ou solution monophasique comportant du solvant essentiellement, du catalyseur, du soufre et des sous-produits, est extrait par la ligne 5 et envoyé directement dans un échangeur de chaleur 30 similaire à l'échangeur 8, avant d'être recyclé vers le réacteur-contacteur. Le contrôle de température est réalisé de manière identique à celui donné à la figure 1, avec un régulateur 9 relié à l'échangeur thermique 30 par une ligne 10, le fluide réfrigérant étant introduit par une ligne 12 équipée d'une vanne 11 et évacué par une ligne 13.

### Revendications

1. Procédé de traitement d'un gaz contenant au moins de l'hydrogène sulfuré ($H_2S$) et au moins du dioxyde de soufre ($SO_2$) dans lequel on met en contact, à une température adéquate, ledit gaz avec un solvant organique contenant au moins un catalyseur, et où L'on récupère d'une part un effluent gazeux ne contenant pratiquement plus d'hydrogène sulfuré ni de dioxyde de soufre, et d'autre part, du soufre liquide séparé du solvant par une décantation liquide-liquide, **caractérisé en ce que** :

   • on extrait après l'étape de mise en contact au moins un fluide F comportant au moins du solvant, du catalyseur, du soufre et des sous-produits,
- on envoie ledit fluide F à une étape de traitement, comportant au moins une étape de chauffage dudit fluide F à une température choisie pour favoriser la cristallisation des sous-produits et au moins une étape de séparation des sous-produits cristallisés au moins en partie du reste dudit fluide F contenant au moins du solvant,
- à l'issue de l'étape de traitement on récupère un fluide $F_1$ quasiment exempt de sous-produits et composé essentiellement de solvant, de catalyseur et de soufre, ainsi qu'un fluide $F_2$ comportant la majorité des sous-produits.

2. Procédé selon la revendication 1 **caractérisé en ce que** le fluide F extrait est chauffé au cours de l'étape de traitement à une température comprise avantageusement entre 120 et 180 °C et de préférence entre 120 et 150 °C.

3. Procédé selon l'une des revendications 1 et 2 **caractérisé en ce que** l'étape de séparation des sous-produits est réalisée en mettant en oeuvre au moins un des modes opératoires suivants :

   a) on réalise au moins une étape de filtration de manière à récupérer au moins le fluide $F_1$ composé essentiellement de solvant, de catalyseur et de soufre, quasiment exempt de sous-produits, et le fluide $F_2$ comportant la majorité des sous-produits après une étape de régénération du support filtrant, et/ou
   b) on effectue au moins une étape de captation des sous-produits sur un support solide de manière à récupérer au moins le fluide $F_1$ composé essentiellement de solvant, de catalyseur et de soufre, quasiment exempt de sous-produits, et le fluide $F_2$ comportant la majorité des sous-produits après une étape de régénération du support solide,

4. Procédé selon l'une des revendications 1 à 3 **caractérisé en ce qu'**on recycle en partie ou en totalité le fluide $F_1$, tel que du solvant épuré au moins en majorité des sous-produits vers l'étape de mise en contact.

5. Dispositif permettant d'éliminer et de récupérer des sous-produits formés au cours d'un procédé de traitement d'un effluent gazeux contenant au moins de l'hydrogène sulfuré ($H_2S$) et du dioxyde de soufre ($SO_2$) dans lequel on utilise un solvant organique et au moins un catalyseur, ledit dispositif comportant au moins un réacteur-contacteur (1) comprenant au moins une zone de décantation (17), une ligne (2) d'introduction d'au moins un gaz à traiter, une ligne (3) d'introduction d'un fluide comportant au moins du solvant et du catalyseur, une ligne (4) d'extraction d'au moins un gaz épuré et une ligne (5) d'extraction d'un fluide F comportant au moins du solvant, du catalyseur, du soufre et des sous-produits, **caractérisé en ce que** ledit dispositif comporte au moins une zone (14) de traitement alimenté par ladite ligne d'extraction du fluide F, ladite zone de traitement comportant des moyens (20) de chauffage adaptés pour favoriser la cristallisation des sous-produits, des moyens de séparation (22 ou 25) adaptés à séparer les sous-produits cristallisés du reste dudit fluide F comportant au moins du solvant, du catalyseur et du soufre, une ligne (15) d'extraction d'un fluide $F_1$ composé essentiellement de solvant, de catalyseur et de soufre et quasiment exempt de sous-produits, et une ligne (19) d'extraction d'un fluide $F_2$ comportant la majorité des sous-produits.

6. Dispositif selon la revendication 5 **caractérisée en ce que** les moyens de chauffage (20) opèrent par exemple entre 120 et 180 °C et de préférence entre 120 et 150 °C.

7. Dispositif selon l'une des revendication 5 et 6 **caractérisé en ce que** la zone de décantation (17) est située dans la partie inférieure dudit réacteur-contacteur (1).

8. Dispositif selon les revendication 5 à 7 **caractérisé en ce que** la zone de traitement peut comporter au moins un des moyens choisis parmi les suivants :

   - des moyens de filtration, lesdits moyens étant adaptés pour produire au moins le fluide $F_1$ comportant essentiellement du solvant et quasiment exempt de sous-produits, et au moins le fluide $F_2$ comportant la majorité des sous-produits formés, et/ou
   - des moyens de captation, tels que des métaux, des charbons actifs, des zéolithes, des résines, des alumines, des silices ou des céramiques lesdits moyens étant adaptés pour produire au moins le fluide $F_1$ comportant essentiellement du solvant et quasiment exempt de sous-produits, et au moins le fluide $F_2$ comportant la majorité des sous-produits formés.

9. Dispositif selon l'une des revendications 5 à 8 **caractérisé en ce qu'**il comporte une ligne de recyclage d'une partie au moins du solvant issu de l'étape de traitement vers le réacteur-contacteur.

**10.** Dispositif selon l'une des revendications 5 à 9 **caractérisé en ce que** ledit réacteur-contacteur est choisi parmi un des dispositifs donnés dans la liste suivante : réacteur avec garnissage vrac ou structuré ou mélangeur statique SMV ou impacteur ou hydro-éjecteur ou atomiseur ou contacteur à fils.

**11.** Application du procédé selon l'une des revendications 1 à 4 et du dispositif selon l'une des revendications 5 à 10 pour le traitement des effluents d'unités Claus traitant de l'$H_2S$ issu d'opérations d'épuration du gaz naturel ou de raffinage du pétrole brut.

**Claims**

**1.** Process for treating a gas containing at least hydrogen sulphide ($H_2S$) and at least sulphur dioxide ($SO_2$), in which at an appropriate temperature the said gas is contacted with an organic solvent containing at least one catalyst, and where, on the one hand, a gaseous effluent is recovered which no longer contains practically any hydrogen sulphide or sulphur dioxide, and, on the other hand, liquid sulphur is recovered, which is separated from the solvent by liquid-liquid decanting, **characterized in that**:

• after the contacting step at least one fluid F is extracted which comprises at least the solvent, the catalyst, sulphur and by-products,
• the said fluid F is passed to a treatment step comprising at least one step of heating the said fluid F at a temperature selected to promote the crystallization of the by-products, and at least one step of separation of the crystallized by-products, at least in part, from the remainder of the said fluid F containing at least the solvent,
• at the end of the treatment step a fluid $F_1$ is recovered, which is virtually free of by-products and is composed essentially of solvent, catalyst and sulphur, and a fluid $F_2$ is recovered, which comprises the majority of the by-products.

**2.** Process according to Claim 1, **characterized in that** the extracted fluid F is heated during the treatment step at a temperature advantageously between 120 and 180°C and preferably between 120 and 150°C.

**3.** Process according to either of Claims 1 and 2, **characterized in that** the step of separating the by-products is carried out by employing at least one of the following procedures:

a) at least one filtration step is carried out, so as to recover at least the fluid $F_1$, composed essentially of solvent, catalyst and sulphur and virtually free of by-products, and the fluid $F_2$, comprising the majority of the by-products after a step of regeneration of the filtering support, and/or
b) at least one step is performed of capture of the by-products on a solid support, so as to recover at least the fluid $F_1$, composed essentially of solvent, catalyst and sulphur and virtually free of by-products, and the fluid $F_2$, comprising the majority of the by-products after a step of regeneration of the solid support.

**4.** Process according to one of Claims 1 to 3, **characterized in that** some or all of the fluid $F_1$, such as the solvent purified to remove at least most of the by-products, is recycled to the contacting step.

**5.** Device allowing the removal and recovery of the by-products formed during a process for treating gaseous effluent containing at least hydrogen sulphide ($H_2S$) and sulphur dioxide ($SO_2$), in which an organic solvent and at least one catalyst are used, the said device comprising at least one reactor/contactor (1) comprising at least one decanting zone (17), a line (2) for introducing at least one gas for treatment, a line (3) for introducing a fluid comprising at least the solvent and the catalyst, a line (4) for extracting at least one purified gas, and a line (5) for extracting a fluid F comprising at least the solvent, the catalyst, sulphur and by-products, **characterized in that** the said device comprises at least one treatment region (14) supplied by the said line for extraction of the fluid F, the said treatment region comprising heating means (20) adapted so as to promote the crystallization of the by-products, separating means (22 or 25) adapted to separate the crystallized by-products from the remainder of the said fluid F comprising at least the solvent, the catalyst and sulphur, a line (15) for extracting a fluid $F_1$ composed essentially of solvent, catalyst and sulphur and virtually free of by-products, and a line (19) for extracting a fluid $F_2$ comprising the majority of the by-products.

**6.** Device according to Claim 5, **characterized in that** the heating means (20) operate for example between 120 and 180°C and preferably between 120 and 150°C.

7. Device according to either of Claims 5 and 6, **characterized in that** the decanting region (17) is sited in the lower part of the said reactor/contactor (1).

8. Device according to Claims 5 to 7, **characterized in that** the treatment region may comprise at least one of the means selected from the following:

   • filtering means, the said means being adapted so as to produce at least the fluid $F_1$, comprising essentially the solvent and being virtually free of by-products, and at least the fluid $F_2$, comprising the majority of the by-products formed, and/or
   • capture means, such as metals, activated carbons, zeolites, resins, aluminas, silicas or ceramics, the said means being adapted so as to produce at least the fluid $F_1$ comprising essentially the solvent and being virtually free of by-products, and at least the fluid $F_2$ comprising the majority of by-products formed.

9. Device according to one of Claims 5 to 8, **characterized in that** it comprises a line for recycling at least some of the solvent discharged from the treatment step to the reactor/contactor.

10. Device according to one of Claims 5 to 9, **characterized in that** the said reactor/contactor is selected from one of the devices given in the following list: reactor with dumped or structured packing or static SMV mixer or impactor or hydro-ejector or atomizer or impinging jet contactor.

11. Application of the process according to one of Claims 1 to 4 and of the device according to one of Claims 5 to 10 for the treatment of effluents from Claus units treating the $H_2S$ obtained from natural gas purification or crude oil refining operations.

**Patentansprüche**

1. Verfahren zur Behandlung eines Gases, das mindestens Schwefelwasserstoff ($H_2S$) und mindestens Schwefeldioxid ($SO_2$) enthält, bei dem, bei einer passenden Temperatur, das Gas mit einem organischen Lösemittel in Kontakt gebracht wird, das mindestens einen Katalysator enthält, und wobei einerseits ein gasförmiger Abfluss, der praktisch weder Schwefelwasserstoff noch Schwefeldioxid enthält, und andererseits flüssiger Schwefel, der durch eine Flüssig-flüssig-Dekantierung vom Lösemittel getrennt ist, wiedergewonnen wird, **dadurch gekennzeichnet, dass**:

   - nach dem Schritt des in In-Kontakt-Bringens mindestens ein Fluid F extrahiert wird, das mindestens Lösemittel, Katalysator, Schwefel und Nebenprodukte umfasst,
   - das Fluid F zu einem Schritt der Behandlung geschickt wird, der mindestens einen Schritt des Erwärmens des Fluids F auf eine Temperatur umfasst, die ausgewählt ist, um die Kristallisation der Nebenprodukte zu begünstigen, und mindestens einen Schritt der Abscheidung der mindestens teilweise kristallisierten Nebenprodukte vom Rest des Fluids F, das mindestens Lösemittel enthält,
   - am Ende des Schritts zur Behandlung ein Fluid $F_1$ wiedergewonnen wird, das fast frei von Nebenprodukten ist und im Wesentlichen aus Lösemittel, Katalysator und Schwefel besteht, sowie ein Fluid $F_2$, das den Großteil der Nebenprodukte umfasst.

2. Verfahren nach Anspruch 1, **dadurch gekennzeichnet, dass** das extrahierte Fluid F während des Schritts zur Behandlung auf eine Temperatur erwärmt wird, die vorteilhafterweise im Bereich zwischen 120 und 180 °C, und bevorzugt zwischen 120 und 150 °C liegt.

3. Verfahren nach einem der Ansprüche 1 und 2, **dadurch gekennzeichnet, dass** der Schritt der Abscheidung der Nebenprodukte ausgeführt wird, indem mindestens eine der folgenden Prozeduren eingesetzt wird:

   a) Es wird mindestens ein Schritt zur Filtration ausgeführt, um mindestens das Fluid $F_1$ wiederzugewinnen, das im Wesentlichen aus Lösemittel, Katalysator und Schwefel besteht, das fast frei von Nebenprodukten ist, und das Fluid $F_2$, das den Großteil der Nebenprodukte nach einem Schritt der Regeneration des filternden Trägers umfasst, und/oder
   b) mindestens ein Schritt des Einfangens der Nebenprodukte auf einem festen Träger ausgeführt wird, um mindestens das Fluid $F_1$ wiederzugewinnen, das im Wesentlichen aus Lösemittel, Katalysator und Schwefel besteht, das fast frei von Nebenprodukten ist, und das Fluid $F_2$, das den Großteil der Nebenprodukte umfasst, nach einem Schritt der Regeneration des festen Trägers.

4. Verfahren nach einem der Ansprüche 1 bis 3, **dadurch gekennzeichnet, dass** das Fluid $F_1$, wie etwa das Lösemittel, das mindestens vom Großteil der Nebenprodukte gereinigt ist, teilweise oder vollständig zu einem Schritt des In-Kontakt-Bringens recycelt wird.

5. Vorrichtung, die es ermöglicht, Nebenprodukte zu entfernen und wiederzugewinnen, die sich im Laufe eines Verfahrens zur Behandlung eines gasförmigen Abflusses bilden, der mindestens Schwefelwasserstoff ($H_2S$) und Schwefeldioxid ($SO_2$) enthält, in der ein organisches Lösemittel und mindestens ein Katalysator verwendet wird, wobei die Vorrichtung mindestens einen Kontaktor-Reaktor (1), mindestens eine Dekantierungszone (17), eine Linie (2) zur Einführung mindestens eines zu behandelnden Gases, eine Linie (3) zur Einführung eine Fluids umfasst, das mindestens Lösemittel, Katalysator umfasst, eine Linie (4) zum Extrahieren mindestens eines gereinigten Gases und eine Linie (5) zur Extraktion eine Fluids F, das mindestens Lösemittel, Katalysator, Schwefel und Nebenprodukte umfasst, **dadurch gekennzeichnet, dass** die Vorrichtung mindestens eine Zone (14) zur Behandlung umfasst, die von der Linie zur Extraktion des Fluids F versorgt wird, wobei die Zone zur Behandlung Mittel (20) zum Erwärmen umfasst, die angepasst sind, um die Kristallisation der Nebenprodukte zu begünstigen, Mittel zur Abscheidung (22 oder 25), die angepasst sind, um die Nebenprodukte vom Rest des Fluids abzuscheiden, das mindestens Lösemittel, Katalysator und Schwefel umfasst, eine Linie (15) zur Extraktion eines Fluids F1, das im Wesentlichen aus Lösemittel, Katalysator und Schwefel besteht und fast frei von Nebenprodukten ist, und eine Linie (19) zur Extraktion eines Fluids $F_2$, das den Großteil der Nebenprodukte umfasst.

6. Vorrichtung nach Anspruch 5, **dadurch gekennzeichnet, dass** die Mittel zum Erwärmen (20) zum Beispiel zwischen 120 und 180 °C und bevorzugt zwischen 120 und 150 °C arbeiten.

7. Vorrichtung nach einem der Ansprüche 5 und 6, **dadurch gekennzeichnet, dass** die Dekantierungszone (17) im unteren Teil des Kontaktor-Reaktors (1) liegt.

8. Vorrichtung nach den Ansprüchen 5 bis 7, **dadurch gekennzeichnet, dass** die Zone zur Behandlung mindestens ein Mittel umfassen kann, das aus den folgenden ausgewählt ist:

   - Mittel zur Filtration, wobei die Mittel angepasst sind, um mindestens das Fluid $F_1$ zu produzieren, das im Wesentlichen Lösemittel umfasst und fast frei von Nebenprodukten ist, und mindestens das Fluid $F_2$, das den Großteil der gebildeten Nebenprodukte umfasst, und/oder
   - Mittel zum Einfangen, wie etwa Metalle, Aktivkohlen, Zeolithe, Harze, Aluminiumoxide, Siliciumdioxide oder Keramiken, wobei die Mittel angepasst sind, um mindestens das Fluid $F_1$ zu produzieren, das im Wesentlichen Lösemittel umfasst und fast frei von Nebenprodukten ist, und mindestens das Fluid $F_2$, das den Großteil der gebildeten Nebenprodukte umfasst.

9. Vorrichtung nach einem der Ansprüche 5 bis 8, **dadurch gekennzeichnet, dass** sie eine Linie zum Recyceln mindestens eines Teils des Lösemittels zum Kontaktor-Reaktor umfasst, das aus dem Schritt der Behandlung stammt.

10. Vorrichtung nach einem der Ansprüche 5 bis 9, **dadurch gekennzeichnet, dass** der Kontaktor-Reaktor aus den in der folgenden Liste genannten Vorrichtungen ausgewählt ist: Reaktor mit loser Schüttung oder strukturierter Schüttung oder statischer SMV-Mischer oder Impaktor oder Hydropumpe oder Zerstäuber oder Draht-Kontaktor.

11. Anwendung des Verfahrens nach einem der Ansprüche 1 bis 4 und der Vorrichtung nach einem der Ansprüche 5 bis 10 zur Behandlung von Abflüssen aus Claus-Einheiten, die $H_2S$ behandeln, der aus Reinigungsvorgängen von Erdgas oder aus der Raffination von Rohöl stammt.

## FIG.1

## FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2532190
- FR 2735460
- FR 2115721
- US 3796796 A
- FR 2122674
- FR 2138371
- US 3832454 A

**Littérature non-brevet citée dans la description**

- **Y. BARTHEL ; H. GRUHIER.** The IFP Clauspol 1500 process: eight years of industrial experience. *Chem. Eng. Monogr.,* 1979, vol. 10, 69-86
- **HENNICO A. ; BARTHEL Y. ; BENAYOUN D. ; DEZAEL C.** Clauspol 300 : the new IFPTGT process. *For présentation at AIChE Summer National Meeting,* 14 Août 1994